# EUROPÄISCHE PATENTSCHRIFT

(11) **EP 2 300 505 B1**
(45) Veröffentlichungstag und Bekanntmachung des Hinweises auf die Patenterteilung: **27.03.2013**
(21) Anmeldenummer: 09779861.5
(22) Anmeldetag: 22.06.2009
(51) Int. Cl.: C08F 265/02, C08F 265/04, C09D 151/00, C09J 153/00

(54) **GEKOPPELTE POLYESTER-ACRYLAT-PFROPFPOLYMERE**
COUPLED POLYESTER-ACRYLATE GRAFT POLYMERS
POLYMÈRES GREFFÉS DE POLYESTER/ACRYLATE COUPLÉS

(30) Priorität: 16.07.2008 DE 102008040464
(43) Veröffentlichungstag der Anmeldung: 30.03.2011
(73) Patentinhaber: Evonik Degussa GmbH, 45128 Essen (DE)
(72) Erfinder: KOSCHABEK, René, 69469 Weinheim (DE); BRENNER, Gabriele, 48249 Dülmen (DE); BORGMANN, Cornelia, 60486 Frankfurt (DE); ALT, Hartmut, 63636 Brachttal (DE); BALK, Sven, 60594 Frankfurt (DE)
(86) Internationale Anmeldenummer: PCT/EP2009/057720
(87) Internationale Veröffentlichungsnummer: WO 2010/006880

(56) Entgegenhaltungen:
- EP-A- 1 950 232
- DE-A1- 19 943 438
- US-A- 4 069 274
- US-A- 5 424 364
- US-A- 5 972 425

## Beschreibung

Die vorliegende Erfindung betrifft Polyesteracrylatpfropfcopolymere umfassend Poly(meth)acrylate als Pfropfsubstrat, wobei das Pfropfsubstrat kettenständige und/oder endständigen funktionelle Gruppen und Polyesterseitenketten als Pfropfzweige aufweist und/oder an mindestens ein Kettenende des Pfropfsubstrats gebundene Polyesterblöcke aufweist. Weiterhin betrifft die vorliegende Erfindung Verfahren zur Herstellung der Polyesteracrylatpfropfcopolymere sowie deren Verwendung.

Die Synthese von Polymerarchitekturen, die auf einer Kombination von Polyestern und Poly(meth)acrylaten basieren, ist schon seit Mitte der 1960er Jahre Thema der industriellen Forschung. Die potentiellen Anwendungen solcher Materialien umfassen dabei z. B. Dispergiermittel (siehe z. B. US 5, 424, 364 ; EP 1 555 174), Imprägniermittel (GB 1,007,723), Bindemittel für Beschichtungen (z. B. beschrieben in DE 2 006 630, JP 09 216 921, US 4, 069, 274 ; oder DE 4 345 086) oder für Klebemassen (z. B. in DE 2 006 630), oder medizinische Anwendungen (EP 1 950 282) und Kosmetik (DE 199 43 438).
Die Möglichkeiten der gezielten Kombination von Poly(meth)acrylaten und Polyestern sind vielfältig. So sind Systeme aus Polyester-Hauptketten und (Meth)acrylat-Seitenketten aus DE 4427227 bekannt.

Um zu Polymerarchitekturen zu gelangen, die eine
Poly(meth)acrylathauptkette und Polyesterseitenketten aufweisen, ist es im allgemeinen üblich, Polyester zu verwenden, die durch ringöffnende Polymerisation von Lactonen erhalten werden können.
Beispielsweise beschreibt EP 1227113 die ringöffnende Polymerisation von ε-caprolacton durch hydroxylfunktionelle monomere Acrylatverbindungen z. B. Hydroxyethylacrylat. Die Produkte dieser Reaktion können dann mit anderen ungesättigten Verbindungen z. B. radikalisch copolymerisiert werden. Allerdings kann diese Methode nur mit einer kleinen Menge ε-Caprolacton durchgeführt werden.

Eine weitere Methode (z. B. in JP 06206974) ist es, zunächst ε-Caprolacton zum Homopolymerisat umzusetzen und dann mittels eines Di- bzw. Polyisocyanates an ein Polyacrylatpolyol zu koppeln. Auf diese Weise können sehr definierte Produkte mit niedrigem Homopolymerisatanteil erhalten werden. Nachteil dieses Verfahren ist der hohe verfahrenstechnische Aufwand, der durch die separate Herstellung der einzelnen Polymerblöcke und die anschließende Koppelung dieser mittels einer Isocyanatkomponente entsteht. Des Weiteren gestaltet sich die Handhabung von Isocyanaten unter wirtschaftlichen und auch toxikologischen Gesichtspunkten als problematisch.

Eine weitere Methode, um kammartige Polymere mit Poly(meth)acrylat-Hauptkette und Esterseitenketten zu erhalten beschreibt EP 1464674. Darin wird die radikalische Polymerisation von ε-Caprolacton-modifizierten VinylMonomeren offenbart. Hierbei handelt es sich um ε-Caprolacton-Oligomere, die durch ringöffnende Oligomerisierung mittels Hydroxy(meth)acrylaten wie z. B. Hydroxybutyl(meth)acrylat erhalten werden können. Die ε-Caprolacton-modifizierten Vinyl-Monomere werden z. B. von *Daicel Chemical Industries* unter dem Markennamen *Placcel F* kommerziell vertrieben. Diese Methode ist aufwendig und damit kostenintensiv. Die Reinigung der Makromonomere ist sehr aufwendig. Auch zeigt sich, dass entsprechende Makromonomere nur sehr beschränkt mit einer maximalen Anzahl von 10 Caprolactonwiederholungseinheiten verfügbar sind. Die dementsprechend kurzen Esterseitenketten des daraus erhaltenen Poly(meth)acrylates haben somit auch nur einen begrenzten Einfluss auf die Eigenschaften des Polymers.

EP 281095 beschreibt die simultane Haupt- und Seitenketten-Polymerisation. Dabei werden Acrylatmonomere genutzt, die nukleophile Funktionalitäten besitzen, und die, während der Aufbau der Hauptkette propagiert, durch Ringöffnung von Lactonen einen Seitenkettenaufbau initiieren.
Hierbei handelt es sich jedoch um ein unkontrolliertes Verfahren, das zu Produktmischungen mit einer Vielzahl verschiedenster Komponenten wie z. B. Homopolymerisaten führt. Für den Fachmann ergibt sich daraus zwangsläufig, dass, unter den Bedingungen einer ionischen Lactonpolymerisation, die in situ durchgeführte freie radikalische Polymerisation zu Nebenreaktionen wie einer Teilgelierung der Produkte führen muss. Solche Vernetzungen sind jedoch selbst im Falle eines nur geringen Auftretens für die Produktaufarbeitung von großem Nachteil. Ein weiterer Nachteil der Verwendung von Lactonen ist, dass aufgrund der linearen aliphatischen Struktur der Polyesterketten der Glaspunkt der Polymere für viele Anwendungen zu gering ist.
Die rein aliphatische Struktur der Polylactonseitenketten kann darüber hinaus auch bei der Herstellung von Polymermischungen zu Verträglichkeitsproblemen führen.
Auch kann es erforderlich sein, für bestimmte Anwendungen, wie z. B. Lacke und Klebstoffe, die Polymere in organischen Lösungsmitteln zu lösen. Dann ist es erstrebenswert, durch gezielte Auswahl an Rohstoffen für die Poly(meth)acrylathauptkette aber auch für die Polyesterseitenkette die gewünschte Löslichkeit in dem betreffenden Lösungsmittel einzustellen.

Aufgabe der vorliegenden Erfindung war es demgemäß, Polyester-Poly(meth)acrylat-Systeme bereit zu stellen, die als Verträglichkeitsvermittler zwischen Poly(meth)acrylaten und Polyestern dienen und die oben genannten Nachteile umgehen.
Dieses komplexe Anforderungsprofil wird überraschenderweise durch die erfindungsgemäßen Pfropfcopolymere erfüllt. Demgemäß ist ein erster Gegenstand der vorliegenden Erfindung die Bereitstellung von Polyesteracrylat-pfropfcopolymeren umfassend Poly(meth)acrylate als Pfropfsubstrat, wobei das Pfropfsubstrat kettenständige und/oder endständige funktionelle Gruppen und Polyesterseitenketten als Pfropfzweige aufweist und/oder an mindestens ein Kettenende des Pfropfsubstrats gebundene Polyesterblöcke aufweist, wobei die funktionellen Gruppen ausgewählt sind aus der Gruppe umfassend Hydroxyl gruppen, Säuregruppen und/oder Mercaptogruppen.

Im Sinne der vorliegenden Erfindung werden als Pfropfcopolymere Polymere bezeichnet, bei denen an der Hauptkette Seitenketten angebunden sind, wobei die Seitenketten von einer Länge sind, dass sie bereits für sich als Polymere anzusehen sind. Die Hauptkette der Pfropfcopolymere wird im Allgemeinen als Rückgratpolymer, Pfropfsubstrat oder Pfropfgrundlage bezeichnet, die Seitenketten als Pfropfäste, Pfropfauflage oder Pfropfzweige.

Die erfindungsgemäßen Polyesteracrylat-pfropfcopolymeren zeichnen sich durch eine Polyester-Poly(meth)acrylat Polymerarchitektur von bürstenartigem Aufbau aus, die ein Poly(meth)acrylat-Rückgrat und Polyesterseitenketten aufweisen, wobei die Polyesterseitenketten nicht durch ringöffnende Polymerisation von Lactonen erzeugt werden.
Der Vorteil eines derartigen Polymers ist das vielseitigere Einsatzspektrum, das sich durch die freie Wählbarkeit der verwendeten Polyester bzw. Poly(meth)acrylate und deren jeweiligen Rohstoffe ergibt. Dabei wurde überraschenderweise gefunden, dass man derartige Polyester-Poly(meth)acrylat Polymerarchitekturen ohne Gelierung erhalten kann, in dem carboxyl- und/ oder hydroxylgruppentragende Polyester auf Poly(meth)acrylate, die Monomere mit funktionellen Gruppen enthalten, koppelnd gepfropft werden.

Der Gehalt an Monomeren mit funktionellen Gruppen in den erfindungsgemäßen Poly(meth)acrylaten liegt im Bereich von 0,1 % und 10 Gew.-%, bevorzugt zwischen 0,1 % und 5,0 Gew.-%, besonders bevorzugt zwischen 1,0 % bis 2,5 Gew.-%, bezogen auf den Poly(meth)acrylatanteil im Polyesteracrylatpfropfcopolymeren.

Als Pfropfsubstrat werden in der vorliegenden Erfindung Poly(meth)acrylate eingesetzt. Die Poly(meth)acrylate basieren auf Monomeren, insbesondere auf Monomeren, die funktionelle Gruppen tragen. Entsprechende Monomere können aus der Gruppe der Methacrylate bzw. Acrylate ausgewählt sein. Die funktionellen Gruppen sind ausgewählt aus der Gruppe umfassend Hydroxylgruppen, Säuregruppen, Aminogruppen und/oder Mercaptogruppen.
Bevorzugt handelt es sich bei der funktionellen Gruppe um eine Hydroxylgruppe oder eine Säuregruppe. Insbesondere bevorzugt handelt es sich bei der funktionellen Gruppe um eine Hydroxylgruppe.

Besonders bevorzugt wird die funktionelle Gruppe durch Copolymerisation von OH-Gruppen aufweisenden Monomeren in das erfindungsgemäß verwendete Poly(meth)acrylat eingebracht. Insbesondere bevorzugt sind OH-funktionalisierte Acrylate bzw. Methacrylate. Als Beispiel seien Hydroxyethylmethacrylat, Hydroxyethylacrylat, Hydroxypropylmethacrylat, Hydroxypropylacrylat, 2,3-Dihydroxypropylacrylat und 2,3-Dihydroxypropylmethacrylat aufgeführt.

Alternativ oder zusätzlich können OH-Gruppen durch eingesetzte Regler in Poly(meth)acrylate eingebaut werden. Bei der Verwendung eines solchen Reglers und anschließender Kopplung mit dem Polyester entstehen AB-Diblockcopolymere und/oder ABA Triblockcopolymere. Bei den A-Blöcken handelt es sich dabei um die Poly(meth)acrylat-Blöcke und bei dem B-Block um einen Polyesterblock, der vor der Kupplung zu einem AB-Diblockcopolymer zumindest eine endständige bzw. im Fall zur Kupplung zu einem ABA-Triblockcopolymer zwei endständige Carboxylgruppen aufweist.
In Kombination mit OH-funktionalisierten Monomeren werden Pfropfcopolymere mit einem zusätzlichen Polyesterblock an einem der Polymethacrylat-Kettenenden gebildet. Als OH-Gruppen tragende Regler seien besonders bevorzugt hydroxyfunktionalisierte Mercaptane und/oder andere funktionalisierte oder auch unfunktionalisierte Verbindungen genannt, die eine oder mehrere Thiolgruppen und Hydroxylgruppen aufweisen. Dabei kann es sich beispielsweise um Mercaptoethanol, Mercaptopropanol, Mercaptobutanol, Mercaptopentanol oder Mercaptohexanol handeln.
An die funktionellen Gruppen, insbesondere OH-Gruppen, des Pfropfsubstrates sind die endständigen Säureendgruppen eines Polyesters angekoppelt.

Die verwendeten Poly(meth)acrylat Präpolymere, d.h. die ungepfropften Pfropfsubstrate, weisen bevorzugt eine OH-Zahl zwischen 5 mg KOH/g und 40 mg KOH/g, besonders bevorzugt zwischen 10 mg KOH/g und 35 mg KOH/g und insbesondere bevorzugt zwischen 15 mg KOH/g und 30 mg KOH/g auf.
Die Hydroxylzahl (OH-Zahl) wird bestimmt nach DIN 53240-2.

Alternativ kann es sich bei den funktionellen Gruppen auch um Säuregruppen handeln. Diese werden durch Copolymerisation einer Säure, durch Copolymerisation eines Monomers, das anschließend polymeranalog zu einer Säure umgesetzt werden kann, oder durch Verwendung eines Säure-haltigen Reglers in die Kette eingebaut. Bei den copolymerisierbaren Säuren kann es sich zum Beispiel um Acrylsäure, Methacrylsäure oder Itaconsäure handeln. Bei den polymeranalog umsetzbaren Bausteinen handelt es sich beispielsweise um tert-Butylmethacrylat oder tert-Butylacrylat, die in Hitze unter Abspaltung von Isubuten eine Säuregruppe bilden können. Bei den säuregruppenhaltigen Reglern dient Thioglykolsäure als gebräuchliches Beispiel.

In dieser Ausführungsform sind an die Säuregruppen des Pfropfsubstrates die endständigen OH-Gruppen eines Polyesters angekoppelt.
Die zu dieser Variante verwendeten Poly(meth)acrylat Präpolymere weisen bevorzugt eine Säurezahl zwischen 5 mg KOH/g und 40 mg KOH/g,
besonders bevorzugt zwischen 10 mg KOH/g und 35 mg KOH/g und insbesondere bevorzugt zwischen 15 mg KOH/g und 30 mg KOH/g auf.
Die Säurezahl wird bestimmt nach DIN EN ISO 2114.

Zusätzlich zu den funktionelle Gruppen tragenden Bausteinen setzen sich die erfindungsgemäß verwendeten Poly(meth)acrylate aus Monomeren zusammen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl-(meth)acrylat, Pentyl(meth)acrylat, 2-Ethylhexyl(meth)acrylat, Stearyl-(meth)acrylat, Lauryl(meth)acrylat, Cyclohexyl(meth)acrylat, Isobornyl-(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)-methylether(meth)acrylat, zusammen.

Neben den zuvor dargelegten (Meth)acrylaten können die zu polymerisierenden Zusammensetzungen auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z. B. Vinylacetat, Styrol, substituierte Styrole mit einem Alkylsubstituenten an der Vinylgruppe, wie z. B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z. B. Divinylbenzol sowie in den A-Blöcken die jeweiligen hydroxyfunktionalisierten und/oder aminofunktionalisierten und/oder mercaptofunktionalisierten Verbindungen. Ferner können diese Copolymere auch derart hergestellt werden, dass sie eine Hydroxy- und/oder Amino- und/oder Mercaptofunktionalität in einem Substituenten aufweisen. Solche Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinyl-thiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.

Die erfindungsgemäßen Poly(meth)acrylat Präpolymere weisen bevorzugt ein Molekulargewicht M_{w} zwischen 1 000 und 200 000 g/mol auf. Besonders bevorzugt ist ein Molekulargewicht M_{w} zwischen 5 000 und 100 000 g/mol und ganz besonders bevorzugt ist ein Molekulargewicht M_{w} zwischen 10 000 und 50 000 g/mol.
Das Gewichtsmittel des Molekulargewichts M_{w} wird mittels Gelpermeationschromatographie mit IR-Detektion nach DIN 55672-1 mit Tetrahydrofuran als Eluent gegen Polystyrol-Standard bestimmt.

Im Einzelnen wird das Poly(meth)acrylat nach Anteil und Zusammensetzung zweckmäßigerweise im Hinblick auf die gewünschte technische Funktion gewählt.

Die erfindungsgemäß verwendeten Poly(meth)acrylate können mittels Substanz-, Emulsions-, Suspensions-, Mini- bzw. Mikrosuspensions- oder Lösungspolymerisation hergestellt werden. Bei dem eingesetzten Polymerisationsverfahren kann es sich um eine freiradikalische oder kontrolliert radikalische Polymerisation handeln. Beispiele für kontrolliert radikalische Polymerisationsverfahren sind die "Nitroxide mediated polymerziation" (NMP) und die "reversible addition-fragmentation chain transfer" (RAFT) Polymerisation.

Die zu verwendenden Radikalinitiatoren hängen von der gewählten Polymerisationsmethode bzw. Polymerisationstechnik ab. Die jeweils zu verwendenden Initiatoren sind dem Fachmann bekannt bzw. sind in der dem Fachmann allgemein bekannten Polymerliteratur beschrieben. Als Beispiel finden in der freiradikalischen Lösungs- oder Suspensionspolymerisation in der Regel Azoverbindungen wie AIBN oder Perester wie tert.-Butylperoctoat oder Laurylperoxid als Radikalinitiator Verwendung.

Gegebenenfalls können zur Einstellung des gewünschten Molekulargewichts des Pfropfsubstrats A noch Regler mit verwendet werden. Als Regler eignen sich z. B. Schwefelregler, insbesondere mercaptogruppenhaltige Regler, z. B. Dodecylmercaptan. Die Konzentrationen an Reglern liegen im Allgemeinen bei 0,1 Gew.-% bis 2,0 Gew.-%, bezogen auf das Gesamtpolymerisat.

Die Polyester, die als Pfropfzweige in der vorliegenden Erfindung eingesetzt werden, haben eine lineare oder verzweigte Struktur und sind gekennzeichnet durch
- ein zahlenmittleres Molekulargewicht Mₙ von 500 bis 10000 g/mol, bevorzugt 800 bis 3000 g/mol
- eine Säurezahl von 1 bis 100 mg KOH/g, bevorzugt von 5 bis 70 mg KOH/g, ganz besonders bevorzugt 20 bis 60 mg KOH/g
- eine Hydroxylzahl zwischen 1 und 200 mg KOH/g, bevorzugt zwischen 10 und 100 mg KOH/g, ganz besonders bevorzugt 20 und 60 mg KOH/g

Das Zahlenmittel des Molekulargewichts Mₙ wird mittels Gelpermeationschromatographie mit IR-Detektion nach DIN 55672-1 mit Tetrahydrofuran als Eluent gegen Polystyrol- Standard bestimmt.
Die Säurezahl wird bestimmt nach DIN EN ISO 2114.
Die Hydroxylzahl (OH-Zahl) wird bestimmt nach DIN 53240-2.

Die erfindungsgemäß eingesetzten Polyester werden in der Regel durch Polykondensation von Polycarbonsäuren und Polyolen synthetisiert. Alternativ können sie aber auch mittels ringöffnender Polymerisation cyclischer Ester oder durch Polyaddition dargestellt werden.

Die Wahl der Polycarbonsäuren an sich ist beliebig. So können aliphatische und/oder cycloaliphatische und/oder aromatische Polycarbonsäuren enthalten sein. Unter Polycarbonsäuren sind Verbindungen zu verstehen, die bevorzugt mehr als eine und besonders bevorzugt zwei Carboxylgruppen tragen; abweichend von der allgemeinen Definition sind in besonderen Ausführungsformen auch Monocarbonsäuren darunter zu verstehen.

Beispiele für aliphatische Polycarbonsäuren sind Bernsteinsäure, Glutarsäure, Adipinsäure, Azelainsäure, Sebacinsäure, Undecandicarbonsäure, Dodecandisäure, Tridecandicarbonsäure, Tetradecandisäure, Octadecandisäure. Beispiele für cycloaliphatische Polycarbonsäuren sind die Isomere der Cyclohexandicarbonsäure. Beispiele für aromatische Polycarbonsäuren sind die Isomere der Benzoldicarbonsäure und Trimellitsäure. Gegebenenfalls können an Stelle der freien Polycarbonsäuren auch ihre veresterbaren Derivate wie z. B. entsprechende Niedrigalkylester oder cyclische Anhydride eingesetzt werden.

Die Art der für die erfindungsgemäßen Polyester eingesetzten Polyole ist an sich beliebig. So können aliphatische und/oder cycloaliphatische und/oder aromatische Polyole enthalten sein. Unter Polyolen sind Verbindungen zu verstehen, die bevorzugt mehr als eine und besonders bevorzugt zwei Hydroxylgruppen tragen; abweichend von der allgemeinen Definition sind in besonderen Ausführungsformen auch Monohydroxyverbindungen darunter zu verstehen.

Beispiele für Polyole sind Ethylenglykol, Propandiol-1,2, Propandiol-1,3, Butandiol-1,4, Pentandiol-1,5, Hexandiol-1,6, Nonandiol-1,9, Dodecandiol-1,12, Neopentylglykol, Butylethylpropandiol-1,3, Methylpropandiol-1,3, Methylpentandiole, Cyclohexandimethanole, Trimethylolpropan, Pentaerythrol und Mischungen daraus.

Unter aromatischen Polyolen sind Umsetzungsprodukte von aromatischen Polyhydroxyverbindungen, wie z. B. Hydrochinon, Bisphenol A, Bisphenol F, Dihydroxynaphthalin etc., mit Epoxiden wie z. B. Ethylenoxid oder Propylenoxid zu verstehen. Als Polyole können auch Etherdiole, d. h. Oligomere bzw. Polymere, z. B. auf Basis Ethylenglykol, Propylenglykol oder Butandiol-1,4 enthalten sein. Besonders bevorzugt sind lineare aliphatische Glykole.

Die erfindungsgemäß eingesetzten Polyester können mittels etablierter Techniken für (Poly-)Kondensationsreaktionen hergestellt werden. Sie können z. B. durch Kondensation von Polyolen und Polycarbonsäuren oder deren Ester, Anhydride oder Säurechloride in einer Inertgasatmosphäre bei Temperaturen von 100 bis 270 °C, vorzugsweise von 130 bis 240 °C, in der Schmelze oder in azeotroper Fahrweise gewonnen werden, wie es z. B. in Methoden der Organischen Chemie (Houben-Weyl), Bd. 14/2, 1 - 5, 21 - 23, 40 - 44, Georg Thieme Verlag, Stuttgart, 1963, bei C. R. Martens, Alkyl Resins, 51 -59, Reinhold Plastics Appl., Series, Reinhold Publishing Comp., New York, 1961 oder in den DE-OSS 27 35 497 und 30 04 903, beschrieben ist. Wahlweise können die Polyester ohne oder mit Fahrhilfsmitteln oder Additiven, wie z. B. Antioxidantien, ausgestattet werden.

In einer besonderen Ausführungsform werden carboxylgruppentragende Polyester erhalten, indem nach dem oben beschriebenen Verfahren erhaltene hydroxylgruppenhaltige Polyester mit stöchiometrischen Mengen von Dicarbonsäureanhydriden umgesetzt werden. Die Reaktion kann bei Temperaturen von 120 bis 180 °C nahezu quantitativ durchgeführt werden. Beispiele für geeignete Dicarbonsäureanhydride sind Bernsteinsäureanhydrid, Phthalsäureanhydrid, Hexahydrophthalsäureanhydrid, Maleinsäureanhydrid, Trimellitsäureanhydrid und/oder Adipinsäureanhydrid.

Ein weiterer Gegenstand der vorliegenden Erfindung sind Verfahren zur Herstellung der erfindungsgemäßen Polyesteracrylatpfropfcopolymere, umfassend die koppelnde Pfropfung von Polyestern an ein Pfropfsubstrat, wobei das Pfropfsubstrat Poly(meth)acrylate mit kettenständigen und/oder endständigen funktionellen Gruppen umfasst, unter Ausbildung von Polyesterseitenketten als Pfropfzweige und/oder unter Ausbildung von an mindestens ein Kettenende des Pfropfsubstrats gebundenen Polyesterblöcken. Die Polyesterketten werden durch koppelnde Pfropfung von carboxyl- und/ oder hydroxylgruppentragenden Polyestern auf die funktionellen Gruppen des Poly(meth)acrylatrückgrades generiert.

Die erfindungsgemäßen Polyesteracrylatpfropfcopolymere können mittels etablierter Techniken für (Poly-)Kondensationsreaktionen hergestellt werden. Sie können z. B. durch Veresterung der Hydroxyl- und/ oder Carboxylgruppen tragenden Polyester mit Poly(meth)acrylaten, die Monomere mit nukleophilen Gruppen enthalten, in einer Inertgasatmosphäre bei Temperaturen von 50 °C bis 240 °C, bevorzugt von 130 bis 200 °C in der Schmelze oder azeotroper Fahrweise gewonnen werden. Wahlweise können die Polyesteracrylatpfropfcopolymere ohne oder mit Fahrhilfsmitteln oder Additiven wie z. B. Antioxidantien ausgestattet werden.

Das erfindungsgemäße Verfahren kann mit unterschiedlichen Verfahrensausgestaltungen eingesetzt werden. So können in einer Ausführungsform der Polyester und das Poly(meth)acrylat jeweils separat hergestellt und isoliert werden und dann im erfindungsgemäßen Verfahren gemeinsam zur Reaktion gebracht werden. In der einfachsten Ausführungsform, vorzugsweise dann wenn der erfindungsgemäß eingesetzte Polyester in der Schmelze hergestellt wird, wird das Poly(meth)acrylat in den frisch synthetisierten Polyester gegeben. Auf diese Weise wird ein zusätzlicher Aufheizschritt bei der koppelnden Pfropfung vermieden.

Die Mengen, die an Polyester für die koppelnde Pfropfung eingesetzt werden, liegen zwischen 10 und 90 Gewichtsteilen, bevorzugt zwischen 20 und 80 Gewichtsteilen und ganz besonders bevorzugt zwischen 30 und 70 Gewichtsteilen, bezogen auf das Polyesteracrylatpfropfcopolymer.

Die Mengen, die an Poly(meth)acrylat für die koppelnde Pfropfung eingesetzt werden, liegen zwischen 10 und 90 Gewichtsteilen, bevorzugt zwischen 20 und 80 Gewichtsteilen und ganz besonders bevorzugt zwischen 30 und 70 Gewichtsteilen, bezogen auf das Polyesteracrylatpfropfcopolymer.

Das Polyesteracrylatpfropfcopolymer kann ein Gewichtsmittel des Molekulargewicht M_{w} von 2000 und 250000 g/mol, bevorzugt 7000 und 150000 g/mol und ganz besonders bevorzugt zwischen 12000 und 75000 g/mol aufweisen.

Das Gewichtsmittel des Molekulargewichts M_{w} wird mittels Gelpermeationschromatographie mit IR-Detektion nach DIN 55672-1 mit Tetrahydrofuran als Eluent gegen Polystyrol- Standard bestimmt.

Für die erfindungsgemäßen Pfropf- bzw. Blockcopolymere ergibt sich ein breites Anwendungsfeld. Die Auswahl der Anwendungsbeispiele ist nicht dazu geeignet die Verwendung der erfindungsgemäßen Polymere einzuschränken. Die Beispiele sollen einzig dazu dienen, die breite Einsatzmöglichkeit der beschriebenen Polymere darzustellen.

Demgemäß ist ein weiterer Gegenstand der vorliegenden Erfindung die Verwendung der erfindungsgemäßen Polyesteracrylatpfropfcopolymere in Heißklebemassen, Klebmassen, Dichtmassen, Haftklebstoffen oder Heißsiegelmassen. In solchen Klebformulierungen können die erfindungsgemäßen Polyesteracrylatpfropfcopolymere als Verträglichkeitsvermittler verwendet werden. Aufgrund der Polymerkompatibilität der Polyesteracrylatpfropfcopolymere sowohl mit Poly(meth)acrylaten als auch Polyestern kann durch Zugabe der Pfropfcopolymere ein breites Spektrum neuartiger Formulierungen realisiert werden, die eine verbesserte Kohäsion und Adhäsion sowie eine verbesserte Haftung zu einer Vielzahl von Substraten aufweisen.

Solche Klebformulierungen können neben den erfindungsgemäßen Polyesteracrylatpfropfcopolymeren weitere Zusätze enthalten. Als Zusätze seien beispielhaft Polymere wie z. B. Copolyester, Polyacrylate, Polyetherpolyole, Ethylenvinylacetat, Polyolefine, thermoplastische Polyurethane und/oder Vernetzer wie z. B. Polyisocyanate, blockierte Polyisocyanate, Silane und/oder Tackifier wie z. B. Kolophoniumharze, Kohlenwasserstoffharze, Phenolharze und/oder Pigmente bzw. Füllstoffe wie z. B.Talkum, Siliciumdioxid, Calciumcarbonat, Bariumsulfat, Titandioxid, Ruß und/oder farbige Pigmente, Flammschutzmittel wie z. B. Zinkborate, Ammoniumpolyphosphate und/oder Antimonoxide, und/oder Alterungschutz- und Hilfsmittel genannt.

In den Klebformulierungen beträgt der Anteil der erfindungsgemäßen Polyesteracrylatpfropfcopolymere 1 bis 100 Gew.-%, bevorzugt 1 bis 70 Gew.-% und ganz besonders 1 bis 50 Gew.-%.

Ein weiteres Anwendungsgebiet für die erfindungsgemäßen Polyesteracrylatpfropfcopolymere ist der Einsatz in Beschichtungsmaterialien oder in Lacken z. B. als Bindemittel oder als Dispergiermittel. Die Pfropfcopolymere zeigen bei vergleichbarem Molekulargewicht sowohl in Lösung als auch in Schmelze deutlich geringere Viskositäten als lineare Polymerarchitekturen. Lackformulierungen, die die erfindungsgemäßen Polyesteracrylatpfropfcopolymere als Bindemittel enthalten, können somit besser verarbeitet werden bzw. mit einem höheren Feststoffgehalt hergestellt werden. Aufgrund der unterschiedlichen Eigenschaften des Poly(meth)acrylat- und des Polyesteranteils in den Polyesteracrylatpfropfcopolymeren zeigen die Polymere auch besonders gute Eigenschaften zur Dispergierung von Pigmenten in Beschichtungs- bzw. Lackformulierungen.

Weitere Anwendungsgebiete sind z. B. Formulierungen zur kosmetischen Anwendung, der Einsatz als Polymeradditiv oder in Verpackungen.

Heißklebemassen, Klebmassen, Dichtmassen, Haftklebstoffe Heißsiegelmassen, Formulierungen zur kosmetischen Anwendung, Beschichtungsmaterialien, Lacke, Verpackungen enthaltend die vorab beschriebenen Polyesteracrylatpfropfcopolymere sind ebenfalls Gegenstand der vorliegenden Erfindung.
Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

### Allgemeine Angaben zur Produktcharakterisierung:

Die im Folgenden aufgelisteten Methoden werden zur Charakterisierung sämtlicher in der vorliegenden Erfindung aufgeführten Polymere eingesetzt:

Die im Folgenden angegebenen Werte für das Molekulargewicht werden mittels Gelpermeationschromatographie (GPC, RI Detektion) bestimmt. Dabei ist M_{w} das massenmittlere Molekulargewicht, Mₙ das zahlenmittleres Molekulargewicht und Mₚ das Molgewicht im Peakmaximum. Die gelpermeationschromatographische Charakterisierung aller Proben erfolgt in Tetrahydrofuran als Eluent nach DIN 55672-1 gegen Polystyrol-Standard. Angabe der Werte in g/mol

Die Säurezahl wird bestimmt nach DIN EN ISO 2114. Unter der Säurezahl (SZ) versteht man dabei diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N methanolischer Kalilauge gegen Phenolphthalein titriert.

Die Hydroxylzahl (OH-Zahl) wird bestimmt nach DIN 53240-2. Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Die Viskositätszahlen (VZ) werden aus einer 0,5%-igen Lösung in Chloroform bei 25 °C gemäß DIN EN ISO 1628-1 bestimmt.

### Beispiel 1: Herstellung eines Poly(meth)acrylates

In einem Doppelmantelgefäß mit angeschlossenem Thermostaten, Rückflusskühler, Blattrührer und Innenthermometer werden 245 g Butylacetat, 120 g Methylmethacrylat und 2,5 g 2-Hydroxyethylmethacrylat vorgelegt. Die Mischung wird auf 105 °C erhitzt und anschließend mit 3,1 g 2-Mercaptoethanol (in 10 ml Butylacetat gelöst) versetzt. Die Initiierung erfolgt durch Zugabe von 3,7 g tert-Butylperbenzoat. Nach 20 minütigem Rühren wird eine Mischung aus 50 g Butylacetat, 8,2 g tert-Butylperbenzoat, 9,7 g 2-Mercaptoethanol, 361 g Methylmethacrylat und 7,5 g 2-Hydroxyethylmethacrylat über einen Zeitraum von vier Stunden zudosiert. Nach beendeter Dosierung wird für weitere 2 h bei 105 °C und anschließend 2 h bei 90 °C gerührt. Abschließend wird das Lösungsmittel destillativ entfernt.

| Analytische Daten | |
|---|---|
| Hydroxylzahl: | 24 mg KOH/g |
| Mₙ : | 4800 g/mol |
| M_{w}: | 12200 g/mol |
| Mₚ : | 13600 g/mol |

### Beispiel 2: Herstellung eines Poly(meth)acrylates

In einem 5 l Doppelmantelgefäß mit angeschlossenem Thermostaten, Rückflußkühler, Rührer und Innenthermometer wird als Suspensionsstabilisator frischgefälltes Al(OH)₃ hergestellt, indem zu 2838 g vollentsalztem Wasser 7,7 g Al₂(SO₄)₃, 0,4 g Komplexbildner (Trilon A), 0,2 g Emulgator (Emulgator K 30 erhältlich von Bayer AG) zugegeben und mit 64,4 g einer 10%-igen wässrigen Soda-Lösung ausgefällt wird. Unter Rühren wird nun eine Mischung aus 1867 g Methylmethacrylat, 38 g Hydroxyethylmethacrylat, 57,2 g 3-Mercapto-1-hexanol und 28,6 g Dilaurylperoxid zugegeben. Die Polymerisation wird bei 72 °C Innentemperatur 84 min durchgeführt. Es folgt eine Nachreaktionsphase von 2 h bei einer Innentemperatur von 82 °C. Nach Abkühlen wird durch Zugabe von einer 50%igen Schwefelsäure der Stabilisator in wasserlösliches Aluminiumsulfat überführt. Das Perlpolymerisat wird abfiltriert, mit vollentsalztem Wasser gewaschen und in einem Trockenschrank bei 35 °C zwei Tage getrocknet.

| Analytische Daten | |
|---|---|
| Hydroxylzahl: | 22 mg KOH/g |
| Viskositätszahl: | 13,7 cm³/g |

### Beispiel 3: Herstellung eines Poly(meth)acrylates

In einem 5 l Doppelmantelgefäß mit angeschlossenem Thermostaten, Rückflusskühler, Rührer und Innenthermometer wird als Suspensionsstabilisator frischgefälltes Al(OH)₃ hergestellt, indem zu 2838 g vollentsalztem Wasser 7,7 g Al₂(SO₄)₃, 0,4 g Komplexbildner (Trilon A), 0,2 g Emulgator (Emulgator K 30 erhältlich von Bayer AG) zugegeben und mit 64,4 g einer 10%-igen wässrigen Soda-Lösung ausgefällt wird. Unter Rühren wird nun eine Mischung aus 1838 g Methylmethacrylat, 85,7 g Hydroxyethylmethacrylat, 57,2 g n-Dodecylmercaptan und 28,6 g Dilaurylperoxid zugegeben. Die Polymerisation wird bei 72 °C Innentemperatur 84 min durchgeführt. Es folgt eine Nachreaktionsphase von 2 h bei einer Innentemperatur von 82 °C. Nach Abkühlen wird durch Zugabe von einer 50%igen Schwefelsäure der Stabilisator in wasserlösliches Aluminiumsulfat überführt. Das Perlpolymerisat wird abfiltriert, mit vollentsalztem Wasser gewaschen und in einem Trockenschrank bei 35 °C zwei Tage getrocknet.

| Analytische Daten | |
|---|---|
| Hydroxylzahl: | 17 mg KOH/g |
| Viskositätszahl: | 13,7 cm³/g |

### Beispiel 4: Herstellung eines Carboxylgruppen-tragenden Polyesters

Adipinsäure (560.0 g, 3.8 mol) und Hexandiol-1,6 (587.5 g, 5.0 mol) werden in einem 1 l-Kolben mit Destillationsaufsatz im Stickstoffstrom aufgeschmolzen.

Bei Erreichen einer Temperatur von 160 °C beginnt Wasser abzudestillieren. Innerhalb von einer Stunde wird die Temperatur sukzessive auf 240 °C erhöht. Nach einer weiteren Stunde bei dieser Temperatur verlangsamt sich die Wasserabspaltung. Es werden 50 mg Titantetrabutoxid eingerührt und im Vakuum weiter gearbeitet, welches im Verlauf der Reaktion so angepasst wird, dass immer noch Destillat anfällt. Nach Erreichen einer Hydroxylzahl von 125 mg KOH/g und einer Säurezahl von 0.9 mg KOH/g wird auf 160 °C abgekühlt, Butandisäureanhydrid (11.5 g, 1.1 mol) zugegeben und für 60 min bei dieser Temperatur gerührt.

| Analytische Daten | |
|---|---|
| Hydroxylzahl: | 44 mg KOH/g |
| Säurezahl: | 46 mg KOH/g |
| Mₙ | 2100 g/mol |
| M_{w} | 4600 g/mol |
| Mₚ: | 4200 g/mol |

### Beispiel 5: Herstellung eines Carboxylgruppen-tragenden Polyesters

Isophthalsäure (465.0 g, 2.8 mol), Terephthalsäure (199.0 g, 1.2 mol), 1,2-Ethandiol (136.0 g, 2.2 mol), 2,2'-Dimethyl-1,3-propandiol (143.0 g, 1.4 mol) und 1,6-Hexandiol (226.0 g, 1.9 mol) werden in einem 1 l-Kolben mit Destillationsaufsatz im Stickstoffstrom aufgeschmolzen. Bei Erreichen einer Temperatur von 160 °C beginnt Wasser abzudestillieren. Innerhalb von einer Stunde wird die Temperatur sukzessive auf 250 °C erhöht. Nach einer weiteren Stunde bei dieser Temperatur verlangsamt sich die Wasserabspaltung. Es werden 50 mg Titantetrabutoxid eingerührt und im Vakuum weiter gearbeitet, welches im Verlauf der Reaktion so angepasst wird, dass immer noch Destillat anfällt. Nach Erreichen einer Hydroxylzahl von 128 mg KOH/g und einer Säurezahl von 0.9 mg KOH/g wird auf 160 °C abgekühlt, Butandisäureanhydrid (171.0 g, 1.7 mol) zugegeben und für 60 min bei dieser Temperatur gerührt.

| Analytische Daten | |
|---|---|
| Hydroxylzahl: | 55 mg KOH/g |
| Säurezahl: | 55 mg KOH/g |
| Mₙ : | 1900 g/mol |
| M_{w}: | 3500 g/mol |
| Mₚ: | 3500 g/mol |

### Beispiel 6: Herstellung eines erfindungsgemäßen, durch koppelnde Pfropfung hergestellten Polyester - Acrylatcopolymers

In einem 500 ml Dreihalskolben mit Destillationsbrücke werden unter Schutzgasatmosphäre 150 g carboxylgruppentragender Polyester aus Beispiel 4 vorgelegt und auf 50 °C erhitzt. Dann werden 300 g des hydroxylfunktionalisierten Polymethacrylats aus Beispiel 1 während weiterem Aufheizens auf 200 °C zugegeben. Nach beendeter Zugabe wird noch 2 h gerührt. Anschließend werden bei dieser Temperatur 0.05 g Butylzinn-tris-2-ethylhexanoat zugegeben und langsam Vakuum (3 mbar) angelegt. Nach 3 h wird ein in der Schmelze transparentes, farbloses Produkt erhalten.

| Analytische Daten | |
|---|---|
| Hydroxylzahl: | 12 mg KOH/g |
| Säurezahl: | 1,8 mg KOH/g |
| Mₙ: | 7500 g/mol |
| M_{w}: | 29500 g/mol |
| Mₚ: | 19700 g/mol |

### Beispiel 7 : Herstellung eines erfindungsgemäßen, durch koppelnde Pfropfung hergestellten Polyester - Acrylatcopolymers

In einem 500 ml Dreihalskolben mit Destillationsbrücke werden unter Schutzgasatmosphäre 150 g carboxylgruppentragender Polyester aus Beispiel 4 vorgelegt und auf 50 °C erhitzt. Dann werden 300 g des hydroxylfunktionalisierten Polymethacrylats aus Beispiel 2 während weiterem Aufheizens auf 200 °C zugegeben. Nach beendeter Zugabe wird noch 2 h gerührt. Anschließend werden bei dieser Temperatur 0.05 g Butylzinn-tris-2-ethylhexanoat zugegeben und langsam Vakuum (1 mbar) angelegt. Nach 5 h wird ein in der Schmelze transparentes, leicht gelbes Produkt erhalten.

| Analytische Daten | |
|---|---|
| Hydroxylzahl: | 7 mg KOH/g |
| Säurezahl: | 1,9 mg KOH/g |
| Mₙ : | 7200 g/mol |
| M_{w} : | 33800 g/mol |
| Mₚ : | 21400 g/mol |

### Beispiel 8 : Herstellung eines erfindungsgemäßen, durch koppelnde Pfropfung hergestellten Polyester - Acrylatcopolymers

In einem 500 ml Dreihalskolben mit Destillationsbrücke werden unter Schutzgasatmosphäre 130 g carboxylgruppentragender Polyester aus Beispiel 5 vorgelegt und auf 50 °C erhitzt. Dann werden 300 g des hydroxylfunktionalisierten Polymethacrylats aus Beispiel 3 während weiterem Aufheizens auf 200 °C zugegeben. Nach beendeter Zugabe wird noch 2 h gerührt. Anschließend werden bei dieser Temperatur 0.05 g Butylzinn-tris-2-ethylhexanoat zugegeben und Vakuum (3 mbar) angelegt. Nach 3 h wird ein in der Schmelze transparentes, farbloses Produkt erhalten.

| Analytische Daten | |
|---|---|
| Hydroxylzahl: | 13 mg KOH/g |
| Säurezahl: | 5,9 mg KOH/g |
| Mₙ : | 4500 g/mol |
| M_{w} : | 14700 g/mol |
| M_{p:} : | 12500 g/mol |

### Vergleichsbeispiel V1: Herstellung eines nicht erfindungsgemäßen Poly(meth)acrylates

In einem Doppelmantelgefäß mit angeschlossenem Thermostaten, Rückflusskühler, Blattrührer und Innenthermometer werden 245 g Butylacetat, 108 g Methylmethacrylat und 14,7 g 2-Hydroxyethylmethacrylat vorgelegt. Die Mischung wird auf 105 °C erhitzt und anschließend mit 2,4 g n-Dodecylmercaptan (in 10 ml Butylacetat gelöst) versetzt. Die Initiierung erfolgt durch Zugabe von 3,8 g tert-Butylperbenzoat. Nach 20 minütigem Rühren wird eine Mischung aus 50 g Butylacetat, 6,6 g tert-Butylperbenzoat, 14,0 g n-Dodecylmercaptan, 325 g Methylmethacrylat und 44,3 g 2-Hydroxyethylmethacrylat über einen Zeitraum von vier Stunden zudosiert. Nach beendeter Dosierung wird für weitere 2 h bei 105 °C und anschließend 2 h bei 90 °C gerührt. Abschließend wird das Lösungsmittel destillativ entfernt.

| Analytische Daten | |
|---|---|
| Hydroxylzahl: | 53 mg KOH/g |
| Mₙ: | 6200 g/mol |
| M_{w}: | 13900 g/mol |
| Mₚ: | 13200 g/mol |

### Vergleichsbeispiel V2: Versuch zur Herstellung eines durch koppelnde Pfropfung hergestellten Polyester - Acrylatpolymers

In einem 500 ml Dreihalskolben mit Destillationsbrücke werden unter Schutzgasatmosphäre 150 g carboxylgruppentragender Polyester aus Beispiel 4 vorgelegt und auf 50°C erhitzt. Dann werden 300 g des hydroxylfunktionalisierten Polymethacrylats aus Vergleichsbeispiel V1 während weiterem Aufheizen auf 200°C zugegeben. Nach beendeter Zugabe wird noch 2 h gerührt. Anschließend werden bei dieser Temperatur 0,05 g Butylzinn-tris-2-ethylhexanoat zugegeben und langsam Vakuum angelegt. Das Polymer vernetzt bei 50 mbar nach ca. 1 h.
Eine Charakterisierung ist nicht möglich.

Das Vergleichsbeispiel V2 zeigt, dass ein zu hoher Anteil Hydroxylgruppen im Poly(meth)acrylat Präpolymer bei der Pfropfreaktion zu Vernetzungen führt. Poly(meth)acrylate mit einer OH-Zahl kleiner 40 mg KOH/g dagegen lassen sich überraschend mit Säureendgruppen tragenden Polyestern bepfropfen, ohne das das Produkt dabei geliert. Auch konnte gezeigt werden, dass die Herstellungsmethode des Präpolymers für die Pfropfreaktion nicht relevant ist. So können beispielsweise Lösungs- als auch Suspensionspolymerisate eingesetzt werden. Mit den Beispielen kann darüber hinaus gezeigt werden, dass die Zusammensetzung der Poly(meth)acrylate und der Polyester frei wählbar und die Eigenschaften der Copolymere damit gezielt einstellbar sind.

## Patentansprüche

1. Polyesteracrylatpfropfcopolymere umfassend Poly(meth)acrylate als Pfropfsubstrat, wobei das Pfropfsubstrat kettenständige und/oder endständige funktionelle Gruppen und Polyesterseitenketten als Pfropfzweige aufweist und/oder an mindestens ein Kettenende des Pfropfsubstrats gebundene Polyesterblöcke aufweist, wobei die Poly(meth)acrylate auf Monomeren, die funktionelle Gruppen tragen, basieren, wobei die funktionellen Gruppen ausgewählt sind aus der Gruppe umfassend Hydroxylgruppen, Säuregruppen, Aminogruppen und/oder Mercaptogruppen und wobei der Gehalt an Monomeren mit funktionellen Gruppen im Bereich von 0,1 bis 10 Gew.-% liegt, bezogen auf den Poly(meth)acrylatanteil im Polyesteracrylatpfropfcopolymeren.

2. Verfahren zur Herstellung von Polyesteracrylatpfropfcopolymeren gemäß Anspruch 1, umfassend die koppelnde Pfropfung von Polyestern an ein Pfropfsubstrat, wobei das Pfropfsubstrat Poly(meth)acrylate mit kettenständigen und/oder endständigen funktionellen Gruppen umfasst, unter Ausbildung von Polyesterseitenketten als Pfropfzweige und/oder unter Ausbildung von an mindestens ein Kettenende des Pfropfsubstrats gebundenen Polyesterblöcken, wobei die Poly(meth)acrylate auf Monomeren, die funktionelle Gruppen tragen, basieren, wobei die funktionellen Gruppen ausgewählt sind aus der Gruppe umfassend Hydroxylgruppen, Säuregruppen, Aminogruppen und/oder Mercaptogruppen und wobei der Gehalt an Monomeren mit funktionellen Gruppen im Bereich von 0,1 bis 10 Gew.-% liegt, bezogen auf den Poly(meth)acrylatanteil im Polyesteracrylatpfropfcopolymeren.

3. Verfahren gemäß Anspruch 2, **dadurch gekennzeichnet, dass** die Polyester Hydroxyl- und/oder Carboxylgruppen tragen.

4. Verfahren gemäß Anspruch 2 oder 3, **dadurch gekennzeichnet, dass** die Herstellung der Polyesteracrylatpfropfcopolymere durch Umsetzung der Polyester mit Poly(meth)acrylaten in einer Inertgasatmosphäre in der Schmelze oder azeotroper Fahrweise erfolgt.

5. Verfahren gemäß einem oder mehreren der Ansprüche 2 bis 4, **dadurch gekennzeichnet, dass** die Menge an Polyester zwischen 10 und 90 Gewichtsteilen liegt, bezogen auf das Polyesteracrylatpfropfcopolymer.

6. Verwendung der Polyesteracrylatpfropfcopolymere gemäß Anspruch 1 in Heißklebemassen, Klebmassen, Dichtmassen, Haftklebstoffen, Heißsiegelmassen, in Formulierungen zur kosmetischen Anwendung, in Beschichtungsmaterialien, in Lacken, als Polymeradditiv oder in Verpackungen.

7. Heißklebemassen, Klebmassen, Dichtmassen, Haftklebstoffe Heißsiegelmassen, Formulierungen zur kosmetischen Anwendung, Beschichtungsmaterialien, Lacke, Verpackungen enthaltend Polyesteracrylatpfropfcopolymere gemäß Anspruch 1.

## Claims

1. Polyester acrylate graft copolymers comprising poly(meth)acrylates as graft substrate, the graft substrate having internal and/or terminal functional groups and polyester side chains as graft branches and/or having polyester blocks attached to at least one chain end of the graft substrate, wherein the poly(meth)acrylates are based on monomers which carry functional groups, wherein the functional groups are selected from the group encompassing hydroxyl groups, acid groups, amino groups and/or mercapto groups and wherein the amount of monomers with functional groups is in the range from 0.1% to 10% by weight, based on the poly(meth)acrylate fraction in the polyester acrylate graft copolymer.

2. A process for preparing polyester acrylate graft copolymers according to claim 1, comprising the coupling grafting of polyesters to a graft substrate, the graft substrate comprising poly(meth)acrylates having internal and/or terminal functional groups, with formation of polyester side chains as graft branches and/or with formation of polyester blocks attached to at least one chain end of the graft substrate, wherein the poly(meth)acrylates are based on monomers which carry functional groups, wherein the functional groups are selected from the group encompassing hydroxyl groups, acid groups, amino groups and/or mercapto groups and wherein the amount of monomers with functional groups is in the range from 0.1% to 10% by weight, based on the poly(meth)acrylate fraction in the polyester acrylate graft copolymer.

3. A process according to claim 2, **characterized in that** the polyesters carry hydroxyl groups and/or carboxyl groups.

4. A process according to claim 2 or 3, **characterized in that** the polyester acrylate graft copolymers are prepared by reacting the polyesters with poly(meth)acrylates in an inert gas atmosphere in the melt or in azeotropic regime.

5. A process according to one or more of claims 2 to 4, **characterized in that** the amount of polyester is between 10 and 90 parts by weight, based on the polyester acrylate graft copolymer.

6. The use of the polyester acrylate graft copolymers according to claim 1 in hotmelt adhesives, adhesive-bonding compositions, sealants, pressure-sensitive adhesives, heat-sealing compositions, in formulations for cosmetic use, in coating materials, in paints, as a polymer additive or in packaging.

7. Hotmelt adhesives, adhesive-bonding compositions, sealants, pressure-sensitive adhesives, heat-sealing compositions, formulations for cosmetic use, coating materials, paints, packaging comprising polyester acrylate graft copolymers according to claim 1.

## Revendications

1. Copolymères greffés polyester-acrylate comprenant des poly(méth)acrylates en tant que substrat de greffage, le substrat de greffage comportant des groupes fonctionnels sur la chaîne et/ou en bout de chaîne et des chaînes latérales polyester en tant que rameaux greffés et/ou comportant des séquences polyester liées à au moins une extrémité de la chaîne du substrat de greffage, les poly(méth)acrylates étant à base de monomères qui portent des groupes fonctionnels, les groupes fonctionnels étant choisis dans l'ensemble comprenant des groupes hydroxy, des groupes acides, des groupes amino et/ou des groupes mercapto et la teneur en monomères à groupes fonctionnels se situant dans la plage de 0,1 à 10 % en poids, par rapport à la fraction poly(méth)acrylate dans le copolymère greffé polyester-acrylate.

2. Procédé pour la préparation de copolymères greffés polyester-acrylate selon la revendication 1, comprenant le greffage couplant de polyesters sur un substrat de greffage, le substrat de greffage comprenant des poly(méth)acrylates à groupes fonctionnels sur la chaîne et/ou en bout de chaîne, avec formation de chaînes latérales polyester en tant que rameaux greffés et/ou avec formation de séquences polyester liées à au moins une extrémité de la chaîne du substrat de greffage, les poly(méth)acrylates étant à base de monomères qui portent des groupes fonctionnels, les groupes fonctionnels étant choisis dans l'ensemble comprenant des groupes hydroxy, des groupes acides, des groupes amino et/ou des groupes mercapto et la teneur en monomères à groupes fonctionnels se situant dans la plage de 0,1 à 10 % en poids, par rapport à la fraction poly(méth)acrylate dans le copolymère greffé polyester-acrylate.

3. Procédé selon la revendication 2, **caractérisé en ce que** les polyesters portent des groupes hydroxy et/ou carboxy.

4. Procédé selon la revendication 2 ou 3, **caractérisé en ce que** la préparation des copolymères greffés polyester-acrylate s'effectue par mise en réaction des polyesters avec des poly(méth)acrylates dans une atmosphère de gaz inerte dans la masse fondue ou en mode opératoire azéotropique.

5. Procédé selon une ou plusieurs des revendications 2 à 4, **caractérisé en ce que** la quantité de polyester est comprise entre 10 et 90 parties en poids, par rapport au copolymère polyester-acrylate.

6. Utilisation des copolymères greffés polyester-acrylate selon la revendication 1, dans des matières thermoadhésives, des matières adhésives, des matières d'étanchéité, des autoadhésifs, des matières de thermoscellage, dans des compositions pour application cosmétique, dans des matériaux de revêtement, dans des peintures, en tant qu'additif pour polymères ou dans des emballages.

7. Matières thermoadhésives, matières adhésives, matières d'étanchéité, autoadhésifs, matières de thermoscellage, compositions pour application cosmétique, matériaux de revêtement, peintures, emballages, contenant des copolymères greffés polyester-acrylate selon la revendication 1.
